# FASCICULE DE BREVET EUROPEEN

(11) **EP 4 121 918 B1**
(45) Date de publication et mention de la délivrance du brevet: **18.06.2025**
(21) Numéro de dépôt: 21710967.7
(22) Date de dépôt: 11.03.2021
(51) Int. Cl.: B65D 79/02, G06Q 10/0832

(54) **COLIS COMPRENANT UN CAPTEUR D'IMAGES D'UN OBJET À L'INTÉRIEUR DU COLIS, ET UN ÉCRAN D'AFFICHAGE EXTERNE DES IMAGES PRISES PAR LE CAPTEUR**
VERPACKUNG MIT EINEM BILDSENSOR ZUR AUFNAHME VON BILDERN EINES OBJEKTES INNERHALB DER VERPACKUNG UND ÄUSSERER SCHIRM ZUM ANZEIGEN DER VON DEM SENSOR ERFASSTEN BILDER
PACKAGE COMPRISING AN IMAGE SENSOR FOR CAPTURING IMAGES OF AN OBJECT INSIDE THE PACKAGE, AND AN EXTERNAL SCREEN FOR DISPLAYING THE IMAGES CAPTURED BY THE SENSOR

(30) Priorité: 18.03.2020 FR 2002659
(43) Date de publication de la demande: 25.01.2023
(73) Titulaire: PA.COTTE SA, 1009 Pully (CH)
(72) Inventeur: COTTE, Pierre-Alain, 92224 AMBERG (DE)
(74) Mandataire: reuteler & cie SA
(86) Numéro de dépôt international: PCT/EP2021/056279
(87) Numéro de publication internationale: WO 2021/185679

(56) Documents cités:
- US-A1- 2017 286 905

## Description

Le domaine de l'invention est celui de la conception et de la fabrication d'équipements dédiés à la logistique.

Plus précisément, l'invention concerne l'acheminement d'objets, et en particulier celui d'objets généralement issus de plateformes de commerce électronique ou transférés d'un particulier à un autre.

Dans le domaine de l'invention, l'acheminement d'objets par les plateformes de commerce électronique s'opère très souvent en disposant le ou les objets à acheminer dans un colis pourvu, aux fins de l'acheminement, d'une étiquette présentant au moins un code visuel, prenant notamment la forme d'un code-barres imprimé, ce qui permet d'identifier le colis par chacun des acteurs intervenant dans l'acheminement du colis.

Classiquement, pour l'acheminement d'un ou de plusieurs objets, le colis est mis en forme par un opérateur. Le ou les objets sont ensuite disposés dans le colis mis en forme, puis ce dernier est refermé et étiqueté en vue de son acheminement.

Bien entendu, avant d'être acheminé, il est classique que les colis soient mis en attente, et donc entreposés dans un magasin de stockage. Là encore classiquement, le stockage des colis, qui peuvent être nombreux, est réalisé par empilage des colis, ceci pour des raisons évidentes de gain de place.

Actuellement, parmi les opérations qu'un opérateur doit effectuer dans une chaîne logistique, l'une d'entre elles consiste à vérifier, si besoin, le contenu d'un colis avant son prélèvement du stock de colis préparés, en vue d'initialiser son acheminement.

Pour cela, l'opérateur est donc amené, sans autre possibilité, à ouvrir le colis pour en vérifier le contenu de visu. Bien entendu, du fait de l'empilement des colis comme mentionné précédemment, la manipulation de plusieurs colis peut être nécessaire pour dégager le colis à vérifier, pour pouvoir procéder à son ouverture (cette ouverture n'étant bien entendu pas possible lorsque le colis est recouvert par un ou plusieurs autres colis).

On comprend qu'une telle opération, susceptible d'être répétée de nombreuses fois au cours d'une même journée, est source de perte de temps et économiquement non rentable.

Outre la perte de temps occasionnée, la manipulation et la manutention répétées des colis impliquent un effort physique plus ou moins important (certains colis pouvant être plus lourds que d'autres), ce qui est source de troubles musculo-squelettiques.

S'agissant de la vérification du colis par un particulier qui souhaite expédier un objet, la personne qui expédie le colis peut avoir un doute sur le contenu avant expédition et souhaiter en vérifier le contenu alors que le colis est déjà fermé et maintenu fermé par divers moyens (bande adhésive, ficelle, colle...). En présence de tels moyens de maintien de la fermeture, la personne est alors obligée de défaire ce qu'elle a mis en place pour vérifier le contenu, ce qui est bien entendu contraignant et perte de temps. Un dispositif connu de l'art antérieur est décrit dans le brevet US 2017/286905 A1 (RICHARDSON CURTIS R [US] ET AL).

L'invention a notamment pour objectif de pallier les inconvénients de l'art antérieur.

Plus précisément, l'invention a pour objectif de proposer un colis qui permette une vérification et un contrôle visuels de son contenu de manière plus simple et plus rapide que ce qui est permis avec les colis de l'art antérieur.

En ce sens, l'invention a en particulier pour objectif de fournir un tel colis qui facilite le contrôle de son contenu lorsque le colis est recouvert par un ou plusieurs autres colis.

L'invention a également pour objectif de fournir un tel colis qui permette un contrôle rapide de son contenu, y inclus lorsque le colis est pourvu de moyens de maintien de sa fermeture.

Ces objectifs, ainsi que d'autres qui apparaîtront par la suite, sont atteints grâce à un colis destiné à contenir au moins un objet, comprenant :
- une caisse
- un couvercle pouvant adopter, avec la caisse, une configuration de fermeture du colis ou une configuration d'ouverture du colis,
- un dispositif de détection des configurations de fermeture ou d'ouverture du colis,
- au moins un capteur d'images relatives audit ou auxdits objets,
- au moins un dispositif d'affichage électronique consultable depuis l'extérieur du colis,
- une unité informatique, destinée à recevoir des images du capteur d'images et à transmettre au dispositif d'affichage électronique des consignes d'affichage desdites images,
- des moyens de déclenchement du capteur d'images,
caractérisé en ce que les moyens de déclenchement sont présentés sur une façade externe du colis et en ce que l'unité informatique est reliée au dispositif de détection et est paramétrée pour autoriser un affichage, par le dispositif d'affichage, des images du capteur d'images dans la configuration de fermeture du colis et, inversement, interdire l'affichage dans la configuration d'ouverture du colis.

Ainsi, on comprend que, grâce à l'invention, il n'est plus nécessaire d'ouvrir un colis pour en vérifier le contenu ou pour en obtenir un simple aperçu visuel.

En effet, il ressort clairement les caractéristiques de l'invention qu'il suffit à une personne de commander une prise d'images du contenu, ceci en actionnant les moyens de déclenchement du capteur d'images accessibles de l'extérieur du colis, conduisant à l'obtention d'une image visible également de l'extérieur du colis sur le dispositif d'affichage électronique.

Dans l'hypothèse où le colis est stocké à l'intérieur d'une plateforme d'acheminement, et présent dans un empilement de colis, un opérateur qui doit prélever le colis peut s'assurer du contenu sans avoir à manipuler le colis pour le désengager de l'empilement dans lequel le colis est présent. La commande de la prise d'image et l'affichage de l'image obtenue sur le dispositif d'affichage permet à l'opérateur qu'il est en présence du bon colis à prélever et peut donc utilement procéder au retrait de celui-ci à partir de l'empilement de colis. A l'inverse, s'il constate que le contenu n'est pas celui du colis qu'il recherche, il évite une manipulation du colis et, par conséquent, l'effort physique correspondant ainsi qu'un gain de temps.

Toujours dans le cas de colis présent dans un entrepôt ou dans un magasin, l'opérateur, en procédant tel que décrit ci-avant, peut également procéder à un inventaire aisé et rapide de son stock.

Dans le cadre d'un usage privé, c'est-à-dire dans le cas où le colis est à disposition d'un particulier, ce dernier peut aisément vérifier le contenu du colis sans avoir à le ré-ouvrir.

Dans le cas de réception du colis, le particulier peut contrôler le contenu du colis et vérifier qu'il lui est bien destiné, ceci toujours sans ouvrir le colis. En cas d'erreur sur le contenu, un retour à l'expéditeur peut être entrepris sans même avoir ouvert le colis.

Selon une solution avantageuse, le dispositif d'affichage comprend des moyens de maintien affichées des images dans une configuration de fermeture ininterrompue.

De cette façon, non seulement une personne peut consulter le contenu du colis sans l'ouvrir, ceci par l'intermédiaire de l'affichage du contenu sur le dispositif d'affichage, mais il peut aussi visualiser ultérieurement le contenu affiché sur le dispositif d'affichage sans avoir à commander à nouveau le déclenchement de la prise d'images.

Il en résulte que, dans le cadre d'un empilement de colis selon l'invention, une fois que la prise d'image a été commandée sur tous les colis de l'empilement, une personne visualise aisément et rapidement le contenu de chaque colis d'un simple coup d'œil. Il dispose alors en quelque sorte d'un mur d'images.

Dans ce cas, le dispositif d'affichage est préférentiellement du type papier électronique.

Un tel moyen d'affichage permet, de façon connue, de maintenir un affichage sans avoir à exercer une action spécifique sur le colis, avec l'avantage de ne demander qu'une consommation d'énergie très faible, voire nulle.

Selon une solution préférentielle, l'unité informatique est paramétrée pour transmettre au dispositif d'affichage une consigne de réinitialisation, dans une configuration d'ouverture du colis détectée consécutivement à une configuration de fermeture du colis.

Selon cette caractéristique, l'affichage d'une image procurée par le capteur d'image n'est permis que dans une configuration fermée du colis. En d'autres termes, il n'est pas possible pour une personne de falsifier l'affichage du contenu, par exemple en commandant l'affichage du contenu, puis en remplaçant le contenu par un autre contenu.

Selon l'invention, l'unité informatique est paramétrée pour neutraliser les moyens de déclenchement en configuration d'ouverture du colis.

Ainsi, non seulement l'affichage n'est pas possible lorsque le colis est ouvert, mais en plus il n'est même pas possible d'activer, donc de déclencher, le capteur d'images. Les personnes craignant que le colis puisse prendre et stocker des images d'eux à leur insu quand le colis est ouvert peuvent ainsi être rassurées.

Selon une solution avantageuse, le colis comprend des moyens d'éclairage du ou des objets, l'unité informatique étant paramétrée pour activer les moyens d'éclairage lors d'une prise d'image par le capteur d'images.

Ainsi, il est possible d'augmenter la netteté et la qualité de l'image prise par le capteur d'images.

Avantageusement, le dispositif d'affichage électronique est présenté sur une face du colis dite face d'affichage, les moyens de déclenchement étant également présentés sur la face d'affichage.

Ainsi, le moyen de déclenchement de la prise d'image et le dispositif d'affichage sont présentés sur la même face externe du colis. On comprend donc que, selon cette caractéristique, lorsqu'un certain nombre de colis sont stockés de façon empilée, il suffit de disposer les colis en les présentant tous avec la face d'affichage du même côté, le déclenchement de la prise d'image pouvant être alors effectué sans avoir à déplacer et/ou manipuler chaque colis.

Selon une solution avantageuse, le colis comprend des moyens de communication, l'unité informatique étant paramétrée pour émettre, par l'intermédiaire des moyens de communication, à destination d'une unité distante, des premières données contenant la ou les images prises par le capteur d'images.

De cette façon, outre le fait de disposer d'une image en façade externe de chaque colis, il est également possible de disposer à distance des colis d'informations sur le contenu avec en particulier une image du contenu.

Dans ce cas, l'unité informatique est paramétrée pour émettre à destination d'une unité distante des deuxièmes données parmi lesquelles :
- une température dans le colis ;
- un poids du ou des objets ;
- un degré d'hygrométrie dans le colis ;
- une pression dans le colis ;
- un choc subi par le colis ;
- un signal d'ouverture du colis passager ;
- une concentration en CO2.

Ainsi, il est possible de vérifier pour certains types d'objets visualisés que leur intégrité physique est préservée. C'est le cas par exemple si le ou les objets contenus dans le colis concernent des denrées alimentaires ou des produits pharmaceutiques pour lesquels certaines conditions de conservation et/ou de transport doivent être respectées.

Dans ce cas, selon une variante envisageable, le colis comprend au moins un capteur des deuxièmes données.

Selon une autre variante envisageable, le colis comprend des moyens de saisie et d'enregistrement des deuxièmes données par l'unité informatique.

D'autres caractéristiques et avantages de l'invention apparaîtront plus clairement à la lecture de la description suivante d'un mode de réalisation préférentiel de l'invention, donné à titre de simple exemple illustratif et non limitatif, et des dessins annexés parmi lesquels :
- la figure 1 illustre un colis selon l'invention, dans une configuration ouverte ;
- la figure 2 est une vue partielle d'une paroi interne du colis ;
- la figure 3 illustre un colis selon l'invention selon une vue de face ;
- la figure 4 illustre un colis selon l'invention, dans une configuration fermée.

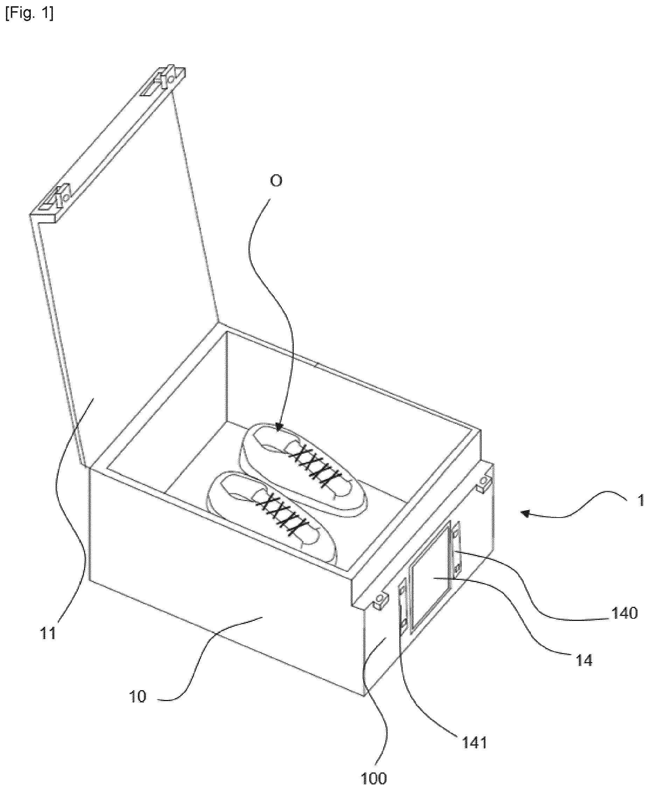

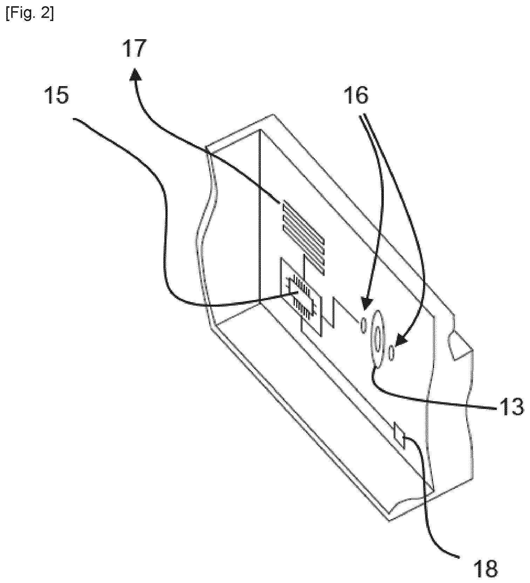

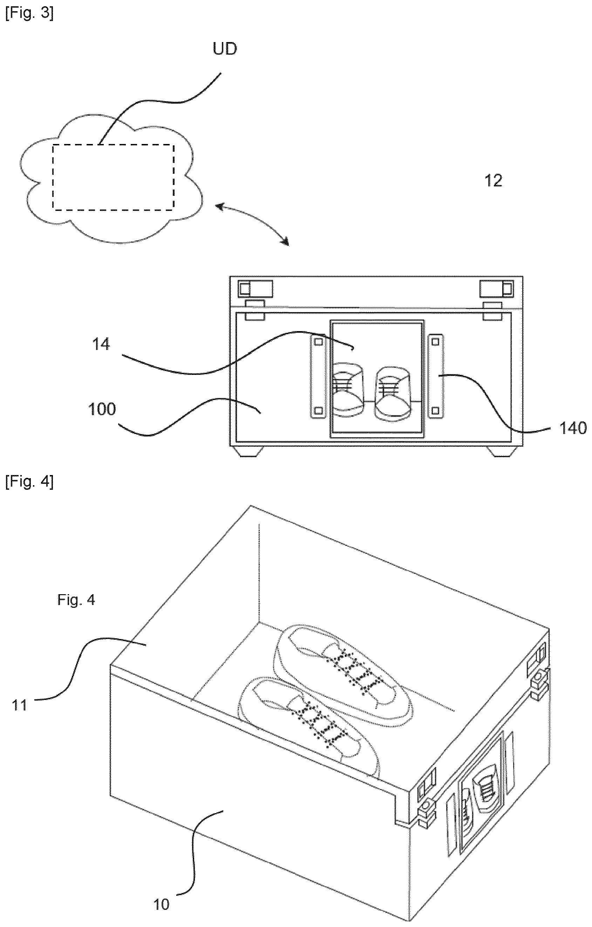

Tel qu'illustré par les figures 1 à 4, un colis 1 selon l'invention, destiné à contenir au moins un objet O, est du type comprenant :
- une caisse 10 délimitant un volume de réception destiné à accueillir un ou plusieurs objets O ;
- un couvercle 1, relié ou non à la caisse 10, et pouvant adopter, avec la caisse, une configuration de fermeture (figure 4) du colis ou une configuration d'ouverture du colis (figure 1) ;
- un dispositif de détection 12 des configurations de fermeture ou d'ouverture du colis ;
- au moins un capteur d'images 13, relatives audit ou auxdits objets ;
- au moins un dispositif d'affichage 14 électronique consultable depuis l'extérieur du colis ;
- une unité informatique 15, destinée à recevoir des images du capteur d'images et à transmettre au dispositif d'affichage électronique des consignes d'affichage des images ;
- des moyens de déclenchement 140 du capteur d'images.

Le dispositif de détection 12 des configurations de fermeture ou d'ouverture du colis peut être obtenu à l'aide de capteurs (switch ou hall) placés dans les poignées de verrouillage (se trouvant en partie supérieure de la façade) et connectés à l'unité de traitement.

Le capteur d'images pourra quant à lui être constitué par un appareil photo numérique, monté dans un angle du volume interne du colis, de façon à procurer une vue d'ensemble du contenu présent dans le colis.

Selon le principe de l'invention, les moyens de déclenchement 140 sont présentés sur une façade externe 100 du colis, de telle sorte que, tandis que le capteur d'images est présenté dans le volume interne délimité dans la caisse 10, le moyen de déclenchement de la prise d'images par le capteur d'images est quant à lui présent à l'extérieur du colis.

De plus, l'unité informatique 15 est reliée au dispositif de détection 12 et est paramétrée pour autoriser un affichage, par le dispositif d'affichage 14, des images du capteur d'images 13, dans la configuration de fermeture du colis.

En d'autres termes, avec un colis selon l'invention, la prise d'images n'est pas autorisée, et même rendue impossible, tant que le colis n'est pas parfaitement fermé. Ainsi, toute atteinte à la vie privée est évitée : les personnes qui pourraient craindre qu'une photo soit prise d'elles par le colis à leur insu, ou de manière involontaire ou non souhaitée, sont garanties qu'une telle situation puisse être déplorée.

Selon le mode de réalisation décrit ci-avant, l'unité électronique 15 est donc reliée électriquement au dispositif de détection des configurations de fermeture ou d'ouverture, ce qui permet à ce dernier de transmettre à l'unité électronique un signal électrique d'ouverture du colis ou, au contraire, un signal de fermeture du colis.

L'unité électronique 15 est également reliée électriquement aux moyens de déclenchement 140, ce qui permet à ce dernier de transmettre à l'unité électronique un signal de déclenchement de prise d'image.

L'unité électronique 15 est aussi reliée électriquement au capteur d'image 13, pour :
- lui transmettre une consigne de prise d'image quand l'unité électronique a reçu des moyens de déclenchement 140 un signal de déclenchement de prise d'image ;
- recevoir en retour des données relatives à l'image (ou aux images) prise(s) par le capteur d'images.

L'unité électronique 15 est aussi reliée électriquement au dispositif d'affichage électronique, pour lui transmettre des consignes d'affichage des images, associées aux données relatives à l'image (ou aux images) prise(s), l'unité électronique étant programmée pour ne transmettre ces consignes au dispositif d'affichage si, dans le même temps, l'unité électronique a reçu un signal de fermeture de la part du dispositif de détection. Donc, à l'inverse, si l'unité électronique a reçu un signal de configuration d'ouverture du colis de la part du dispositif de détection, elle ne transmet aucune consigne d'affichage au dispositif d'affichage, à l'exception éventuelle d'un message « affichage non autorisé ».

Selon le présent mode de réalisation, le dispositif d'affichage est du type papier électronique, un tel dispositif d'affichage constituant des moyens de maintien affichées des images dans une configuration de fermeture ininterrompue du colis.

De plus, l'unité informatique 15 présente l'une et/ou l'autre des caractéristiques suivantes :
- elle est paramétrée pour transmettre au dispositif d'affichage une consigne de réinitialisation dès qu'une configuration d'ouverture du colis est détectée, consécutivement à une configuration de fermeture du colis ;
- elle est paramétrée pour neutraliser les moyens de déclenchement en configuration d'ouverture du colis.

Ainsi, lorsque le dispositif d'affichage est du type papier électronique, l'image prise après fermeture du colis est conservée sur le papier électronique tant que le colis n'est pas ré-ouvert, tandis que l'image présente sur le papier électronique est effacée dès l'ouverture du colis.

Par ailleurs, des moyens d'éclairage 16 sont montés sur au moins une paroi interne du colis. Ces moyens d'éclairage sont activés par l'unité informatique, celle-ci étant paramétrée pour provoquer un déclenchement des moyens d'éclairage lors d'une prise d'image par le capteur d'images. Ainsi, les moyens d'éclairage sont déclenchés à la façon d'un flash.

Tel que cela apparaît sur les figures 1 et 3, le dispositif d'affichage 14 électronique est présenté sur une face externe du colis (désignée par « face d'affichage » 100), et les moyens de déclenchement 140 sont présents également sur la face d'affichage 100.

Les moyens de déclenchement 140 peuvent être constitués par tous moyens envisageables, tels qu'un bouton mécanique ou une zone prédéfinie sur un écran tactile.

Selon une autre caractéristique envisageable de l'invention, le colis comprend des moyens de communication 17. En outre, l'unité informatique est paramétrée pour émettre, par l'intermédiaire des moyens de communication 17, à destination d'une unité distante UD, des premières données contenant une ou plusieurs des images prises par le capteur d'images.

A l'aide des moyens de communication, l'unité informatique peut également être paramétrée pour émettre, à destination d'une unité distante, des deuxièmes données parmi lesquelles la température dans le colis, le poids du contenu du colis, un degré d'hygrométrie dans le colis, une pression dans le colis, un choc subi par le colis, un signal d'ouverture du colis, une concentration en CO2.

Ces deuxièmes données peuvent être mesurée par l'intermédiaire d'un ou de plusieurs capteurs 18 des deuxièmes données. Il est également possible que ces deuxièmes données soient saisies manuellement, le colis comprenant alors des moyens de saisie 141 et d'enregistrement des deuxièmes données par l'unité informatique 15. Toutefois, pour des raisons de sécurité et de protection contre la fraude, la saisie manuelle des données capteurs contenues dans le colis sera préférentiellement rendue impossible.

Dans la mesure où le colis selon l'invention est pourvu de moyens de communication, un mode d'utilisation avancé peut être mise en œuvre. En effet, dans le cadre d'une mise en œuvre de l'invention dans une plateforme logistique ou dans un magasin, ou plus généralement dans une zone de stockage d'une pluralité de colis selon l'invention, une unité informatique peut être paramétrée pour émettre des requêtes de prise d'image à chaque colis et pour collecter les images correspondant à chaque colis, ainsi que des données complémentaires telles que celles listées précédemment, ceci pour constituer un inventaire ou, plus simplement, permettre un contrôle visuel à distance du contenu des colis.

## Revendications

1. Colis (1) d'expédition d'objets, destiné à contenir au moins un objet et destiné à être expédié d'un expéditeur à un destinataire, comprenant :
- une caisse (10) ;
- un couvercle (11) pouvant adopter, avec la caisse (10), une configuration de fermeture du colis ou une configuration d'ouverture du colis,
- un dispositif de détection (12) des configurations de fermeture ou d'ouverture du colis,
- au moins un capteur d'images (13) relatives audit ou auxdits objets,
- au moins un dispositif d'affichage (14) électronique consultable depuis l'extérieur du colis,
- une unité informatique (15), destinée à recevoir des images du capteur d'images (13) et à transmettre au dispositif d'affichage (14) électronique des consignes d'affichage desdites images,
- des moyens de déclenchement (140) du capteur d'images (13),
les moyens de déclenchement (140) sont présentés sur une façade (100) externe du colis et en ce que l'unité informatique (15) est reliée au dispositif de détection (12) et est paramétrée pour :
- autoriser un affichage, par le dispositif d'affichage (14), des images du capteur d'images (13) dans la configuration de fermeture du colis et, l'unité informatique est paramétrée pour inversement,
- interdire l'affichage dans la configuration d'ouverture du colis (1),et
- neutraliser les moyens de déclenchement (140) en configuration d'ouverture du colis.

2. Colis d'expédition d'objets selon la revendication 1, **caractérisé en ce que** le dispositif d'affichage (14) comprend des moyens de maintien affichées des images dans une configuration de fermeture ininterrompue.

3. Colis d'expédition d'objets selon la revendication 2, **caractérisé en ce que** le dispositif d'affichage (14) est du type papier électronique.

4. Colis d'expédition d'objets selon l'une quelconque des revendications 1 à 3, **caractérisé en ce que** l'unité informatique (15) est paramétrée pour transmettre au dispositif d'affichage (14) une consigne de réinitialisation dans une configuration d'ouverture du colis détectée consécutivement à une configuration de fermeture du colis.

5. Colis d'expédition d'objets selon l'une quelconque des revendications 1 à 4, **caractérisé en ce qu'**il comprend des moyens d'éclairage (16) du ou des objets, et **en ce que** l'unité informatique (15) est paramétrée pour activer les moyens d'éclairage (16) lors d'une prise d'image par le capteur d'images (13).

6. Colis d'expédition d'objets selon l'une quelconque des revendications 1 à 5, **caractérisé en ce que** le dispositif d'affichage (14) électronique est présenté sur une face du colis dite face d'affichage, les moyens de déclenchement (140) étant également présentés sur la face d'affichage.

7. Colis d'expédition d'objets selon l'une quelconque des revendications 1 à 6, **caractérisé en ce qu'**il comprend des moyens de communication (17), l'unité informatique (15) étant paramétrée pour émettre, à destination d'une unité distante et par l'intermédiaire des moyens de communication (17), des premières données contenant la ou les images prises par le capteur d'images.

8. Colis d'expédition d'objets selon la revendication 7, **caractérisé en ce que** l'unité informatique (15) est paramétrée pour émettre, à destination d'une unité distante, des deuxièmes données parmi lesquelles :
- une température dans le colis passager ;
- un poids du ou des objets ;
- un degré d'hygrométrie dans le colis passager ;
- une pression dans le colis passager
- un choc subi par le colis passager ;
- un signal d'ouverture du colis passager ;
- une concentration en CO2.

9. Colis d'expédition d'objets selon la revendication 8, **caractérisé en ce qu'**il comprend au moins un capteur (18) des deuxièmes données.

10. Colis d'expédition d'objets selon la revendication 9, **caractérisé en ce qu'**il comprend des moyens de saisie (141) et d'enregistrement des deuxièmes données par l'unité informatique (15).

## Patentansprüche

1. Verpackung (1) für den Versand von Objekten, die zur Aufnahme von mindestens einem Objekt bestimmt ist und zum Versand von einem Versender an einen Empfänger bestimmt ist, umfassend:
- einen Kasten (10);
- einen Deckel (11), der zusammen mit dem Kasten (10) eine Verschlusskonfiguration der Verpackung oder eine geöffnete Konfiguration der Verpackung annehmen kann,
- eine Vorrichtung (12) zum Erfassen der Verschluss- oder geöffneten Konfigurationen der Verpackung,
- mindestens einen Bildsensor (13) bezüglich des oder der Objekte,
- mindestens eine elektronische Anzeigeeinrichtung (14), die von außerhalb der Verpackung ablesbar ist,
- eine IT-Einheit (15) zum Empfangen der Bilder des Bildsensors (13) und zum Übertragen von Anweisungen zum Anzeigen der Bilder an die elektronische Anzeigeeinrichtung (14),
- Auslösemittel (140) für den Bildsensor (13),
wobei die Auslösemittel (140) an einer Außenfläche (100) der Verpackung vorhanden sind und dass die IT-Einheit (15) mit der Erfassungsvorrichtung (12) verbunden und parametriert ist, um:
- eine Anzeige der Bilder des Bildsensors (13) durch die Anzeigeeinrichtung (14) in der Verschlusskonfiguration der Verpackung zuzulassen und die IT-Einheit parametriert ist, um umgekehrt
- die Anzeige in der geöffneten Konfiguration der Verpackung (1) zu untersagen, und
- die Auslösemittel (140) in der geöffneten Konfiguration der Verpackung zu neutralisieren.

2. Verpackung für den Versand von Objekten nach Anspruch 1, **dadurch gekennzeichnet, dass** die Anzeigeeinrichtung (14) Mittel zum Beibehalten der Bildanzeige in einer ununterbrochenen Verschlusskonfiguration umfasst.

3. Verpackung für den Versand von Objekten nach Anspruch 2, **dadurch gekennzeichnet, dass** die Anzeigeeinrichtung (14) vom Typ elektronisches Papier ist.

4. Verpackung für den Versand von Objekten nach einem der Ansprüche 1 bis 3, **dadurch gekennzeichnet, dass** die IT-Einheit (15) parametriert ist, um bei einer nach einer Verschlusskonfiguration der Verpackung festgestellten geöffneten Konfiguration der Verpackung eine Rücksetzungsanweisung an die Anzeigeeinrichtung (14) zu übermitteln.

5. Verpackung für den Versand von Objekten nach einem der Ansprüche 1 bis 4, **dadurch gekennzeichnet, dass** sie Beleuchtungsmittel (16) für das oder die Objekte umfasst und dass die IT-Einheit (15) parametriert ist, um die Beleuchtungsmittel (16) bei einer Bildaufnahme durch den Bildsensor (13) zu aktivieren.

6. Verpackung für den Versand von Objekten nach einem der Ansprüche 1 bis 5, **dadurch gekennzeichnet, dass** die elektronische Anzeigeeinrichtung (14) auf einer Seite der Verpackung, bezeichnet als Anzeigeseite, vorhanden ist, wobei die Auslösevorrichtungen (140) ebenfalls auf der Anzeigeseite vorhanden sind.

7. Verpackung für den Versand von Objekten nach einem der Ansprüche 1 bis 6, **dadurch gekennzeichnet, dass** sie Kommunikationsmittel (17) umfasst, wobei die IT-Einheit (15) parametriert ist, um an eine entfernte Einheit und über die Kommunikationsmittel (17) erste Daten zu senden, die das oder die vom Bildsensor aufgenommenen Bilder enthalten.

8. Verpackung für den Versand von Objekten nach Anspruch 7, **dadurch gekennzeichnet, dass** die IT-Einheit (15) parametriert ist, um an eine entfernte Einheit zweite Daten zu senden, darunter:
- eine Temperatur in der Passagierverpackung;
- ein Gewicht des oder der Objekte;
- einen Feuchtigkeitsgrad in der Passagierverpackung;
- ein Druck in der Passagierverpackung;
- ein von der Passagierverpackung erlittener Stoß;
- ein Öffnungssignal der Passagierverpackung;
- eine CO2-Konzentration.

9. Verpackung für den Versand von Objekten nach Anspruch 8, **dadurch gekennzeichnet, dass** sie mindestens einen Sensor (18) für die zweiten Daten umfasst.

10. Verpackung für den Versand von Objekten nach Anspruch 9, **dadurch gekennzeichnet, dass** sie Mittel (141) zum Erfassen und Speichern der zweiten Daten durch die IT-Einheit (15) umfasst.

## Claims

1. A package (1) for shipping objects, intended to contain at least one object and intended to be shipped from a sender to a recipient, comprising:
- a box (10);
- a lid (11) which can adopt, with the box (10), a closed package configuration or an open package configuration,
- a device (12) for detecting the closed or open package configurations,
- at least one image sensor (13) relating to said object (s),
- at least one electronic display device (14) accessible from the exterior of the package,
- a computing unit (15), intended to receive images from the image sensor (13) and to transmit to the electronic display device (14) instructions to display said images,
- means (140) for triggering the image sensor (13),
the trigger means (140) are presented on an external facade (100) of the package and the computing unit (15) is connected to the detection device (12) and is parameterized to:
- authorize a display, by the display device (14), of the images from the image sensor (13) in the closed package configuration and, the computing unit is parameterized to conversely:
- prohibit the display in the open package configuration (1), and
- neutralize the trigger means (140) in the open package configuration.

2. The object shipment package according to claim 1, **characterized in that** the display device (14) comprises means for maintaining displayed images in an uninterrupted closed configuration.

3. The object shipment package according to claim 2, **characterized in that** the display device (14) is of the electronic paper type.

4. The object shipment package according to any one of claims 1 to 3, **characterized in that** the computing unit (15) is parameterized to transmit to the display device (14) a reset instruction, in an open package configuration detected following a closed package configuration.

5. The object shipment package according to any one of claims 1 to 4, **characterized in that** it comprises means (16) for illuminating the object(s), and **in that** the computing unit (15) is parameterized to activate the illumination means (16) during an image capture by the image sensor (13).

6. The object shipment package according to any one of claims 1 to 5, **characterized in that** the electronic display device (14) is presented on one face of the package called the display face, the trigger means (140) also being presented on the display face.

7. The object shipment package according to any one of claims 1 to 6, **characterized in that** it comprises communication means (17), the computing unit (15) being parameterized to emit, to a remote unit via the communication means (17), first data containing the image(s) taken by the image sensor.

8. The object shipment package according to claim 7, **characterized in that** the computing unit (15) is parameterized to emit second data to a remote unit, including:
- a temperature in the traveling package;
- a weight of the object(s);
- a degree of humidity in the traveling package;
- a pressure in the traveling package;
- a shock applied to the traveling package;
- a signal for opening the traveling package;
- a CO2 concentration.

9. The object shipment package according to claim 8, **characterized in that** it comprises at least one sensor (18) of the second data.

10. The object shipment package according to claim 9, **characterized in that** it comprises means (141) for entering and recording the second data by the computing unit (15).
